# EUROPÄISCHE PATENTANMELDUNG

(11) **EP 1 411 096 A1**
(43) Veröffentlichungstag der Anmeldung: **21.04.2004**
(21) Anmeldenummer: 02023397.9
(22) Anmeldetag: 18.10.2002
(51) Int. Cl.: C09G 1/10, C09D 175/16, C09D 133/00, C09D 5/00

(54) **Zubereitung zum temporären Schutz glatter Oberflächen**

(71) Anmelder: Werner & Mertz GmbH, D-55120 Mainz (DE)
(72) Erfinder: Dvorak, Hans Dr., 68782 Brühl (DE); Gocke, Elmar Dr., 55252 Mainz (DE); Wolf, Albrecht, 55126 Mainz (DE); Wolfers, Heinrich Dr., 47809 Krefeld (DE); Zylla, Joerg, 55128 Mainz (DE)
(74) Vertreter: Thalhammer, Wolfgang, Dr.

(57) **Zusammenfassung**

Beschrieben wird eine Zubereitung zum temporären Schutz glatter Oberflächen, umfassend eine wässrige Dispersion von (gerechnet als Feststoffe, bezogen auf das Gesamtgewicht der Zubereitung): a) 2 bis 20 Gew.-% eines im pH-Bereich von 7 bis 10,5 wasserunlöslichen filmbildenden Polymers, das 0,5 bis 12 Gew.-%, bezogen auf das Gewicht des Polymers, wenigstens einer monoethylenisch ungesättigten Carbonsäure enthält, b) 1 bis 10 Gew.-% eines strahlungshärtbaren Präpolymers, und c) 1 bis 8 Gew.-% Wachs. Die Zubereitung bildet einen strapazier- und kratzfesten Film auf den zu schützenden Oberflächen aus, der am Ende der Nutzungsdauer leicht wieder zu entfernen ist.

## Beschreibung

Die vorliegende Erfindung betrifft eine Zubereitung zum temporären Schutz glatter Oberflächen, insbesondere von Fußböden.

Es ist bekannt, Fußböden mit Pflegeemulsionen zu behandeln, die einen in der Regel glänzenden, strapazierfähigen und rutschhemmenden Pflegefilm ausbilden, der den Bodenbelag unempfindlicher gegen mechanischen Verschleiß und Anschmutzung, wie Absatzstriche, macht. Der Pflegefilm weist üblicherweise eine mehr oder weniger deutliche Wasser- und Detergenzienbeständigkeit auf.

So offenbart die DE-A-1 519 316 eine Polierzubereitung aus einem wässrigen Medium, in dem ein wasserunlösliches Additionspolymer und ein Wachs dispergiert sind, wobei das Polymer Gruppen einer monoethylenisch ungesättigten Carbonsäure aufweist und in Wasser innerhalb des pH-Bereichs von 7 bis 10,5 unlöslich ist und die Zubereitung außerdem mehrwertige Metallionen enthält.

Eine Verbesserung der Strapazier- und Kratzfestigkeit des aufgebrachten Polymerfilms ist wünschenswert. Dadurch könnte die Nutzungsdauer des Pflegefilms verlängert werden und eine Neubeschichtung mit der damit erforderlichen zeit- und kostenintensiven Grundreinigung wäre seltener erforderlich.

Die US 2002/0028621 beschreibt ein Substrat, z. B. einen Fußboden, das eine abziehbare Zwischenschicht und eine Deckschicht umfasst. Die Deckschicht ist strapazierfähiger und weniger leicht abziehbar als die Zwischenschicht. Die Deckschicht kann beispielsweise UV-härtend sein. Wird die Deckschicht dagegen unmittelbar, d.h. ohne Zwischenschicht, auf das Substrat aufgebracht, ist sie ohne aggressive mechanische Verfahren kaum zu entfernen.

Der Erfindung liegt die Aufgabe zugrunde, eine Zubereitung zum temporären Schutz von glatten Oberflächen bereitzustellen, die einen strapazier- und kratzfesten Film auf den zu schützenden Oberflächen ausbildet, der am Ende der Nutzungsdauer leicht wieder zu entfernen ist.

Erfindungsgemäß wird diese Aufgabe durch eine Zubereitung gelöst, die eine wässrige Dispersion von (gerechnet als Feststoffe, bezogen auf das Gesamtgewicht der Zubereitung):
a) 2 bis 20 Gew.-%, vorzugsweise 5 bis 15 Gew.-%, eines im pH-Bereich von 7 bis 10,5 wasserunlöslichen filmbildenden Polymers, das 0,5 bis 12 Gew.-%, bezogen auf das Gewicht des Polymers, wenigstens einer monoethylenisch ungesättigten Carbonsäure enthält,
b) 1 bis 10 Gew.-%, vorzugsweise 2 bis 8 Gew.-%, eines strahlungshärtbaren Präpolymers, und
c) 1 bis 8 Gew.-%, vorzugsweise 2 bis 5 Gew.-%, Wachs
umfasst.

Die Erfindung betrifft außerdem ein Verfahren zum temporären Schutz glatter Oberflächen, insbesondere Fußböden, bei dem man
a) eine oben definierte Zubereitung auf die Oberfläche aufträgt;
b) die Oberfläche unter Bildung eines Schutzfilms physikalisch abtrocknen lässt;
c) den Schutzfilm dem Tageslicht und/oder künstlichem UV-Licht aussetzt;
d) nach einer Benutzungsdauer, den Schutzfilm mit einer wässrigen Lösung eines pHs von mehr als 10,5 entfernt und, gegebenenfalls, die Schritte a) bis c) wiederholt.

Das filmbildende Polymer enthält 0,5 bis 12 Gew.-%, vorzugsweise 1 bis 8 Gew.-%, bezogen auf das Gewicht des Polymers (bzw. das Gesamtgewicht der konstituierenden Monomere), einpolymerisierte Einheiten wenigstens einer monoethylenisch ungesättigten Monocarbonsäure, wie Acrylsäure, Methacrylsäure, oder Itaconsäure, oder Dicarbonsäure, wie Maleinsäure oder Fumarsäure. Die Carbonsäure kann vollständig oder teilweise in Form eines Salzes, z.B. eines Ammonium- und/oder Alkalimetallsalzes, vorliegen.

Das filmbildende Polymer enthält daneben ein oder mehrere hydrophobe ethylenisch ungesättigte Monomere. Hierzu zählen insbesondere die Ester von Acrylsäure oder Methacrylsäure mit C₁-C₁₀-Alkanolen, wie beispielsweise Methyl-, Ethyl-, n-Propyl-, Isopropyl-, n-Butyl-, tert-Butyl-, n-Hexyl(meth)acrylat. Weitere geeignete hydrophobe Monomere sind vinylaromatische Monomere, wie Styrol, α-Methylstyrol, o-Chlorstyrol; Vinylester von aliphatischen C₁-C₁₈-Monocarbonsäuren, wie Vinylacetat, Vinylpropionat, Vinylbutyrat, Vinylvalerat, Vinylhexanoat; Acrylnitril, Methacrylnitril, Vinylchlorid oder Vinylidenchlorid.

Bevorzugte filmbildende Polymere umfassen Einheiten wenigstens eines unter C₁-C₄-Alkylacrylaten ausgewählten Monomers und wenigstens eines unter C₁-C₄-Alkylmethacrylaten, Acrylnitril, Methacrylnitril, Vinylacetat, Styrol, Vinylchlorid oder Vinylidenchlorid ausgewählten Monomers. Styrol-Acrylat-Copolymere sind besonders bevorzugt.

Als strahlungshärtbare Präpolymere eignen sich vorzugsweise solche mit einem gewichtsmittleren Molekulargewicht im Bereich von 500 bis 6000, vorzugsweise 750 bis 5000 und insbesondere 100 bis 2000, die über wenigstens 2 ethylenische Unsättigungen im Molekül verfügen. Hierzu zählen Epoxy(meth)acrylate, Polyester(meth)acrylate, Polyether(meth)-acrylate und insbesondere Urethan(meth)acrylate.

Die Urethan(meth)acrylate sind vorzugsweise aufgebaut aus
i) wenigstens einem Polyisocyanat in NCO-Funktionalität von mindestens 2, das ausgewählt ist unter aliphatischen und aromatischen Diisocyanaten, Isocyanuraten und Biureten davon,
ii) wenigstens einem Polyol, und
iii) wenigstens einem Hydroxyalkyl(meth)acrylat.

Geeignete Diisocyanate sind beispielsweise Tetramethylendiisocyanat, Hexamethylendiisocyanat, Trimethylhexandiisocyanat, Tetrymethylhexandiisocyanat, 1,2-1,3-Diisocyanatocyclohexan, 4,4'-Di(isocyanatocyclohexyl)methan und Isophorondiisocyanat.

Geeignete Polyole sind lineare und verzweigte Polymere mit endständigen OH-Gruppen. Davon sind Polyesterpolyole bevorzugt.

Polyesterpolyole lassen sich durch Veresterung von Di-, Tri- und/oder Polycarbonsäuren mit Di-, Tri- und/oder Polyolen herstellen. Bevorzugte Carbonsäuren sind aliphatische Dicarbonsäuren mit 2 bis 10 Kohlenstoffatomen, beispielsweise Malonsäure, Bernsteinsäure, Glutarsäure und Adipinsäure. Geeignete Diole sind z.B. Glykole, bevorzugt Glykole mit 2 bis 10 Kohlenstoffatomen. Beispiel für geeignete Glykole sind z.B. 1,2-Ethandiol, 1,3-Propandiol, 1,4-Butandiol, 1,5-Pentandiol, 1,6-Hexandiol und Gemische davon. Ein geeignetes Polyesterpolyol ist beispielsweise das Polykondensationsprodukt von Ethylenglykol, 1,6-Hexandiol und Adipinsäure.

Geeignete Hydroxyalkyl(meth)acrylate sind beispielsweise 2-Hydroxyethylacrylat, 2-Hydroxyethylmethacrylat, 2-Hydroxypropylacrylat und 2-Hydroxypropylmethacrylat.

Geeignete Urethanacrylatdispersionen sind im Handel erhältlich, z.B. unter der Bezeichnung Bayhydrol® von der Bayer Aktiengesellschaft oder Laromer® von der BASF Aktiengesellschaft.

Die Wachse oder Wachsmischungen, die erfindungsgemäß eingesetzt werden können, sind Wachse pflanzlichen, tierischen, synthetischen und/oder mineralischen Ursprungs oder Mischungen davon. Hierzu zählen Carnaubawachs, Cannelilawachs, Mantanwachs, Lanolin, Kakaobutter, Baumwollsamenwachs, Stearin, Japanwachs, Bayberry-Wachs, Palmkernwachs, Bienenwachs, Spermaceti, Hammeltalg, Polyethylenwachs, Polypropylenwachs, Wachse, die durch Hydrierung von Kokosnussölen oder Sojabohnenölen erhalten werden, sowie mineralische Wachse, wie beispielsweise Paraffin, Ceresin, Ozokerit oder dergleichen.

In bevorzugten Ausführungsformen enthält die erfindungsgemäße Zubereitung außerdem wenigstens eine mehrwertige Metallverbindung, z.B. ein Salz oder einen Komplex eines mehrwertigen Metalls. Zu geeigneten mehrwertigen Metallen zählen Beryllium, Cadmium, Calcium, Magnesium, Zink, Barium, Strontium, Aluminium, Wismut, Antimon, Blei, Zirkonium, Eisen, Nickel und dergleichen. Hiervon ist Zink besonders bevorzugt.

Das Salz oder der Komplex des mehrwertigen Metalls weist vorzugsweise eine Wasserlöslichkeit von wenigstens etwa 1 Gew.-% bei 25 °C auf. Besonders geeignet sind die Ammoniak- oder Aminkomplexe dieser Metalle. Beim Trocknen der erfindungsgemäßen Zubereitung verdampft das Ammoniak bzw. das Amin, wodurch die mehrwertigen Metallionen freigesetzt werden, die zu einer ionischen Vernetzung des Polymerfilms führen. Im Handel sind Dispersionen filmbildender Polymere erhältlich, die mit mehrwertigen Metallionen abgemischt sind, z.B. unter der Bezeichnung Wokamer® P 2272 (Zn-vernetztes Styrol-Acrylat-Copolymer; Worlée).

In der Regel enthält die erfindungsgemäße Zubereitung wenigstens einen Fotoinitiator. Als Fotoinitiatoren kommen die bekannten Fotoinitiatoren in Frage, insbesondere die des Typs der Benzophenone, Thioxantone, α-Hydroxyketone, α-Dicarbonylverbindungen, Acylphosphinoxide, bis-Acylphosphinoxide und Acylphosphinsulphide. Beispiele geeigneter Fotoinitiatoren sind Benzophenon, Hydroxycyclohexylphenylketon, 4-Methylbenzophenon, 2,4-Dimethylbenzophenon, 2-Chlorbenzophenon, 4-Methoxybenzophenon, Antrachinon, 2-Ethylantrachinon, Thioxanton, 1- und 2-Isopropylthioxanton, 2,4,6-Trimethylbenzoyldiphenylphosphinoxid oder Bis(2,4,6-trimethylbenzoyl)phenylphosphinoxid (erhältlich unter der Bezeichnung Irgacure 819 von Ciba Geigy).

Ist eine Härtung des Schutzfilms am Tageslicht angestrebt, wählt man zweckmäßigerweise einen Fotoinitiator mit einem Extinktionsmaximum im Wellenlängenbereich von 200 bis 400 nm, z.B. Irgacure 813 mit einem Extinktionsmaximum von 380 nm.

In bevorzugten Ausführungsformen enthält die erfindungsgemäße Zubereitung wenigstens einen Weichmacher. Dieser wird, falls verwendet, üblicherweise in einer Menge von 0,5 bis 8 Gew.-%, vorzugsweise 2 bis 6 Gew.-% bezogen auf das Gewicht der Zubereitung eingesetzt. Der Zweck des Weichmachers besteht darin, die Filmbildung zu erleichtern. Die Weichmacher lassen sich in temporäre, d.h. flüchtige, Weichmacher und permanente Weichmacher einteilen. In vielen Fällen ist es bevorzugt, ausschließlich temporäre Weichmacher zu verwenden, da permanente Weichmacher die Gebrauchseigenschaften des getrockneten Films, insbesondere dessen Härte, ungünstig beeinflussen können.

Beispiele für temporäre Weichmacher sind die Monoethyl- oder Monomethylether von Diethylenglykol, Isoforon, Benzylalkohol und 3-Methoxybutanol-1.

Beispiele für permanente Weichmacher sind Benzylbutylphthalat, Dibutylphthalat, Dimethylphthalat, Triphenylphosphat, 2-Ethylhexylbenzylphthalat, Butylcyclohexylphthalat, gemischte Benzoesäure- und Fettölsäureester von Pentaerithryt, Polypropylenadipat-dibenzoat, Diethylenglykoldibenzoat, Tetrabutylthiodisuccinat, Butylphthalylbutylglykolat, Acetyltributylcitrat, Dibenzylsebacat, Tricresylphosphat, Toluolethylsulfonamid, Tributoxyethylphosphat, Di(methylcyclohexyl)phthalat sowie die Di-2-ethylhexylester von Hexamethylenglykoldiphthalat.

Die erfindungsgemäße Zubereitung kann daneben übliche Hilfsmittel, wie Konservierungsmittel, Entschäumer, Tenside, Verlaufshilfsmittel und dergleichen enthalten.

Als Tenside sind insbesondere nichtionische Tenside, wie alkoxylierte Alkanole oder Alkylphenole geeignet. Die Alkylkette dieser Verbindungen umfasst vorzugsweise 8 bis 22 Kohlenstoffatome. Der durchschnittliche Alkoxylierungsgrad beträgt vorzugsweise 2 bis 20. Als Alkoxyleinheiten kommen Ethoxyl-, Propoxylund/oder Butoxyleinheiten in Frage, wobei ethoxylierte Verbindungen bevorzugt sind. Ein besonders geeignetes Tensid ist LUTENSOL A03 der BASF AG (mit 3 mol Ethylenoxid alkoxylierter C₁₃-C₁₅-Oxoalkohol).

Besonders geeignete Verlaufshilfsmittel sind fluoraliphatische Tenside. Bestimmte Weichmacher wie Tributoxyethylphosphat wirken außerdem als Verlaufshilfsmittel.

Die erfindungsgemäße Zubereitung eignet sich zum temporären Schutz der unterschiedlichsten glatten Oberflächen, insbesondere von Fußböden, zum Beispiel mit einem Belag von Linoleum, PVC, Gummi, Natursteinen oder Fliesen. Die Zubereitung wird in der üblichen Weise durch Wischtücher, Aufbürsten oder mittels eines Mopps aufgebracht. Sie trocknen schnell zu einem zusammenhängenden, nicht klebrigen Film. Ein besonderer Vorteil besteht darin, dass der Schutzfilm bereits nach der physikalischen Trocknung begehbar ist. Zur vollständigen Härtung wird der Film dem Tageslicht und/oder künstlichem UV-Licht ausgesetzt, wobei eine Vernetzung der strahlungshärtbaren Präpolymere erfolgt. Als Quelle künstlichen UV-Lichts sind die üblichen UV-Lampen geeignet, die Strahlungsanteile von unter 300 nm aussenden, wie Excimer-Lampen, gepulste Strahler, Laser und Quecksilber-Hochdruckstrahler, wobei Quecksilber-Hochdruckstrahler bevorzugt sind. Die UV-Lichtquelle wird geeigneterweise in geringer Entfernung über der behandelten Oberfläche vorbeigeführt, z. B. mittels eines auf Rollen oder Rädern bewegbaren Gestells.

Wenn nach ausgedehnter Benutzung das Oberflächenbild des Pflegefilms unansprechend geworden ist, kann der Film in einfacher Weise mit einer wässrigen Lösung eines pH-Werts von mehr als 10,5, z.B. einem üblichen alkalischen Grundreiniger, durch einfaches feuchtes Wischen entfernt werden.

Die Erfindung wird durch die beigefügte Figur und die folgenden Beispiele veranschaulicht:

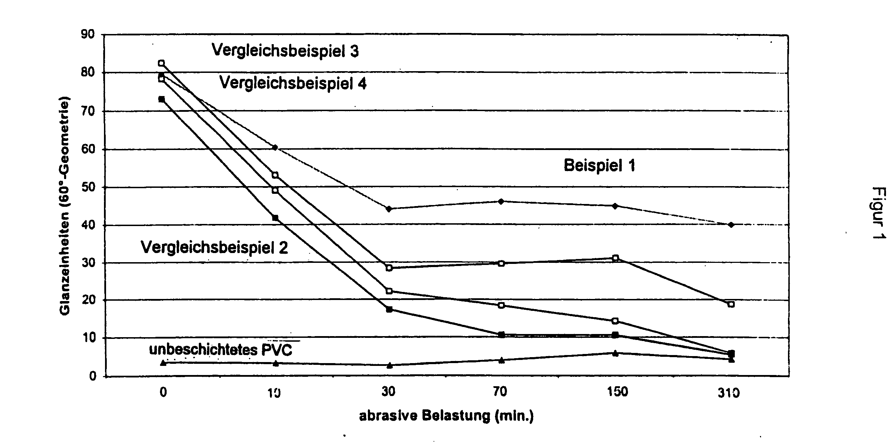

Figur 1 zeigt die Glanzbewahrung von Schutzfilmen, die auf eine PVC-Prüfplatte aufgebracht wurden, nach abrasiver Belastung (nach DIN 67 530/ASTM D 523).

### Beispiel 1

Durch Vermischen der folgenden Komponenten wurde eine erfindungsgemäße Zubereitung hergestellt:

| | |
|---|---|
| demineralisiertes Wasser | 46,3 Masse-% |
| Styrol-Acrylat-Copolymer, Zn-vernetzt (40 %; Wokamer P 2272, Worlée) | 29,7 Masse-% |
| Wachsemulsion (35 %; Poligen WE 1, BASF AG) | 9,3 Masse-% |
| Polyurethan-Acrylat-Dispersion (37 %; Bayhydrol UV VP LS 2317; Bayer AG) | 10,0 Masse-% |
| Ethyldiglykol | 4,2 Masse-% |
| Tensid (LUTENSOL A03, BASF AG) | 0,24 Masse-% |
| Verlaufsmittel (Fluorad FC 120, 3M) | 0,03 Masse-% |
| Fotoinitiator (Irgacure 500; Ciba Geigy) | 0,3 Masse-% |

### Vergleichsbeispiel 2

Durch Vermischen der folgenden Komponenten wurde eine Vergleichszubereitung hergestellt:

| | |
|---|---|
| demineralisiertes Wasser | 42,37 Masse-% |
| Styrol-Acrylat-Copolymer, Zn-vernetzt (ca. 40 %, Wokamer P 2272, Worlée) | 40,00 Masse-% |
| Wachsemulsion (ca. 35 %, Poligen WE 1, BASF AG) | 9,00 Masse-% |
| Phenoxyethanol (Konservierung) | 1,00 Masse-% |
| Ethyldiglykol | 4,00 Masse-% |
| Tributoxyethylphosphat | 2,00 Masse-% |
| Dibutylphthalat | 1,00 Masse-% |
| Tensid (LUTENSOL A03; BASF AG) | 0,40 Masse-% |
| Silikonentschäumer (Tego Antifoam 1488, Degussa/Goldschmidt) | 0,01 Masse-% |
| Verlaufsmittel (Fluorad FC 120, 3M) | 0,02 Masse-% |
| Parfüm | 0,20 Masse-% |

### Vergleichsbeispiel 3

Als Vergleichsbeispiel 3 wurde ein käufliches Bodenbeschichtungsmittel (Gliz® metallic; Henkel Ecolab) verwendet.

### Vergleichsbeispiel 4

Als Vergleichsbeispiel 4 wurde ein käufliches Bodenbeschichtungsmittel (Thermodur, Kiehl) verwendet.

### Anwendungsbeispiel

Auf einer PVC-Prüfplatte (Abmessungen 30 x 90 cm) wurden die Dispersionen von Beispiel 1 und der Vergleichsbeispiele 2, 3 und 4 in getrennten Feldern nebeneinander aufgetragen. Die Prüfplatte wurde 15 Minuten unter eine Quecksilberhochdrucklampe gehalten.

Anschließend wurde die Prüfplatte zusammen mit scharfkantigem Split in eine Trommel gegeben. Die Trommel wurde gleichförmig gerollt, wobei die Prüfsegmente abrasiv belastet wurden. Nach dem Auftrag und nach Prüfintervallen von 10, 20, 40, 80 und weiteren 160 Minuten wurde der Glanzgrad der Schutzfilme und eines unbehandelten Kontrollfeldes mit einem Reflektometer (60°-Geometrie) bestimmt.

Die Ergebnisse sind in Figur 1 dargestellt. Es zeigt sich, dass die Zubereitung von Beispiel 1 eine deutlich bessere Glanzbewahrung nach abrasiver Belastung zeigt.

## Patentansprüche

1. Zubereitung zum temporären Schutz glatter Oberflächen, umfassend eine wässrige Dispersion von (gerechnet als Feststoffe, bezogen auf das Gesamtgewicht der Zubereitung):
a) 2 bis 20 Gew.-% eines im pH-Bereich von 7 bis 10,5 wasserunlöslichen filmbildenden Polymers, das 0,5 bis 12 Gew.-%, bezogen auf das Gewicht des Polymers, wenigstens einer monoethylenisch ungesättigten Carbonsäure enthält,
b) 1 bis 10 Gew.-% eines strahlungshärtbaren Präpolymers, und
c) 1 bis 8 Gew.-% Wachs.

2. Zubereitung nach Anspruch 1, wobei es sich bei dem Präpolymer um ein Polyurethanacrylat handelt.

3. Zubereitung nach Anspruch 1 oder 2, zusätzlich umfassend wenigstens eine mehrwertige Metallverbindung.

4. Zubereitung nach Anspruch 3, wobei es sich bei dem Metall um Zink handelt.

5. Zubereitung nach einem der vorhergehenden Ansprüche, wobei es sich bei dem filmbildenden Polymer um ein Styrol-Acrylat-Copolymer handelt.

6. Zubereitung nach einem der vorhergehenden Ansprüche, außerdem umfassend wenigstens einen Fotoinitiator.

7. Zubereitung nach Anspruch 6, wobei der Fotoinitiator ein Extinktionsmaximum im Wellenlängenbereich von 200 bis 400 nm aufweist.

8. Zubereitung nach einem der vorhergehenden Ansprüche, außerdem umfassend wenigstens einen temporären Weichmacher.

9. Verfahren zum temporären Schutz glatter Oberflächen, insbesondere Fußböden, bei dem man
a) eine Zubereitung nach einem der vorhergehenden Ansprüche auf die Oberfläche aufträgt;
b) die Oberfläche unter Bildung eines Schutzfilms physikalisch abtrocknen lässt;
c) den Schutzfilm dem Tageslicht und/oder künstlichem UV-Licht aussetzt;
d) nach einer Benutzungsdauer, den Schutzfilm mit einer wässrigen Lösung eines pHs von mehr als 10,5 entfernt und, gegebenenfalls, die Schritte a) bis c) wiederholt.
